# EUROPEAN PATENT APPLICATION

(11) **EP 2 879 312 A1**
(43) Date of publication of application: **03.06.2015**
(21) Application number: 13382483.9
(22) Date of filing: 29.11.2013
(51) Int. Cl.: H04B 10/112, B64D 39/00

(54) **A communication system for managing a flying operation involving two or more aircraft**

(71) Applicant: EADS Construcciones Aeronauticas S.A., 28906 Getafe (Madrid) (ES)
(72) Inventor: Minguez Rascon, Fernado Manuel, 28906 Getafe (ES); Arribas Huerta Ángel, 28906 Getafe (ES); Jimenez Duro, Antonio, 28906 Getafe (ES); Gutierrez Perez, César, 28906 Getafe (ES)
(74) Representative: Elzaburu S.L.P.

(57) **Abstract**

The invention provides a communication system of voice and data messages between two or more aircraft for managing a flying operation, such as a tanker aircraft (11) and a receiver aircraft (13) during a refueling operation, that can be used in adverse environmental and/or operational conditions.

The communication system is implemented by a free space optical data link between both aircraft which is compatible with radio silence conditions since it is not based on radio frequency transmissions and comprises first and a second segments (21, 41) in the first and second aircraft with communication control modules (25, 45) adapted for converting the messages of voice and/or data in electrical signals and vice versa and optical modules (23, 43) adapted for emitting beams of light modulated by said electrical signals and for converting received beams of modulated light in electrical signals.

## Description

### FIELD OF THE INVENTION

The present invention relates to a communication system for managing a flying operation involving two or more aircraft such as a refueling operation between a tanker aircraft and a receiver aircraft.

### BACKGROUND

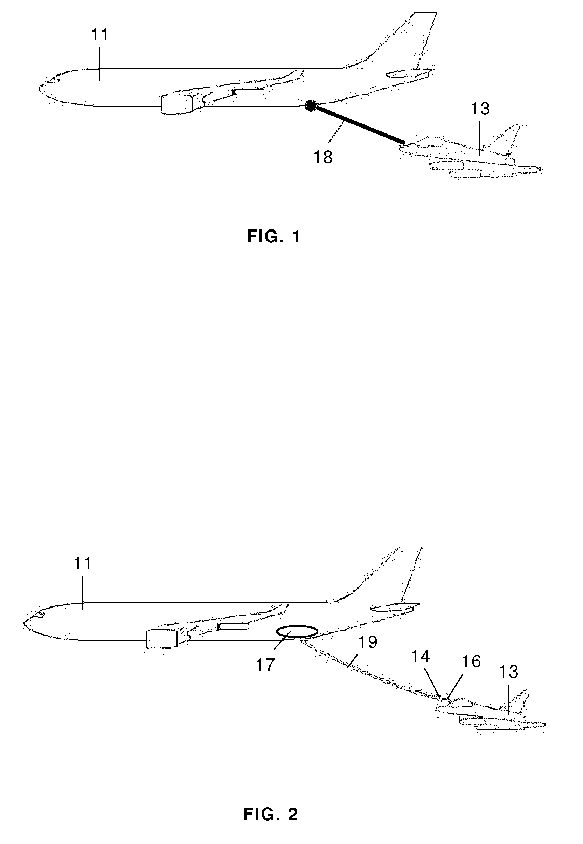

A usual method for in-flight refueling operations illustrated in Figure 1 is based on the use of a boom 18 for interconnecting a tanker aircraft 11 with a receiver aircraft 13. The boom 18 is basically a telescopic or extensible tube attached to the underside of the tanker aircraft 11 by means of an articulation element that provides fuel passage from the tanker aircraft 11 to the receiver aircraft 13. At the tanker aircraft 11, the operator controls visually all steps and procedures for a safe refueling operation. In particular, the operator controls the boom movements until it makes a physical connection with the receptacle of the approaching receiver aircraft 13. Once the refueling operation is finished in a certain session, the boom 18 is hoisted up to its secured position in the tanker aircraft 11.

Another usual method for in-flight refueling operations is called probe and drogue. As illustrated in Figure 2, this refueling system employs a flexible hose 19 that trails from an underwing pod or fuselage cabinet 17 in the tanker aircraft 11. The drogue 14 is a fitting resembling a windsock or shuttlecock, attached at its narrow end with a valve to the flexible hose 19. The drogue 14 stabilizes the hose 19 in flight and provides a funnel to aid insertion of the receiver aircraft probe 16 into the hose 19. The hose 19 connects to a drum unit and, when not in use, the hose/drogue is reeled completely into the cited drum unit in the tanker aircraft 11. The probe 16 is a rigid arm placed on the nose or fuselage of the receiver aircraft 13. This probe 16 is often retracted when not in use, particularly on high speed aircraft. At the end of the probe 16 is a valve that is closed until it mates with the drogue 14, after which it opens and allows fuel to pass from tanker aircraft 11 to receiver aircraft 13.

The refueling operations described above are very sensitive and must be effected in a very precise and accurate way because of safety reasons. Currently, communications supporting Air to Air refueling between tanker and receiver aircraft are made by voice radio transmission and by means of some visual signals (lighting and markings) located in the tanker aircraft.

For boom refueling operations these visual signals consist of movement commands to the receiver aircraft using the so-called Pilot Director Lights (PDL) that are basically a set of lights with some symbols located in the belly of the tanker aircraft, that are switched on or off by the Air Refueling Operator (ARO) or automatically by the boom control system once the tanker and receiver aircraft are connected. The purpose of these lights is to indicate to the receiver pilot in which direction he has to move to get to a suitable position for the refueling operation. These lights are not yet compatible with Night Vision Imaging Systems (NVIS)

In the case of probe and drogue operations from a Pod or a Fuselage Refueling Unit (FRU) the visual indications are based on lights in the Pod/FRU rear part of the fairing that indicates to the receiver aircraft: 1) if the receiver is too aft, too forward or in the refueling zone; 2) if there is fuel transfer or not and 3) permission to connect or disconnect order. Also there are painted in the hoses some marks that give clues to the receiver pilot about the deployed hose length. These indications are not standard since each air force may define their own light pattern.

Effectiveness of these visual aids may be affected by adverse environmental conditions such as bad weather or sun glare.

Voice communication based on conventional electromagnetic systems are not allowed in the case of Emissions Control (EMCON) operations, where electromagnetic communications are severely restricted and therefore neither voice transmission nor communications in a wide broadband are allowed except for the boom interphone system (when tanker and receiver aircraft are coupled). The crews are then forced to operate using gestural indications and rigid predefined plans.

Similar communication problems can be found in other flying operations involving two or more aircraft such as when two or more aircraft fly in formation.

There is therefore a need of communication systems of voice and data between two or more aircraft available in scenarios where electromagnetic communication systems cannot be used and/or in adverse environmental conditions.

### SUMMARY OF THE INVENTION

It is an object of the present invention to provide a communication system of voice and data messages between two or more aircraft for managing a flying operation that can be used in adverse environmental and/or operational conditions.

This object is met by a communication system implemented in a free space optical data link between a first and a second aircraft which is compatible with radio silence conditions since it is not based on radio frequency transmissions comprising a respectively a first segment and a second segment with communication control modules adapted for converting the voice and/or data messages in electrical signals and vice versa and optical modules adapted for emitting beams of light modulated by said electrical signals and for converting received beams of modulated light in electrical signals.

Said beams of light can be beams of infrared light, particularly with a wavelength around 1550 nm for NVIS compatibility according MIL-STD-3009 and for complying with human eye safety standard ANSI Z136.1.

The communication system can be arranged for emitting beams of modulated laser light having a divergence lesser than 1 mrad for minimizing the power losses and also the disturbing influences of, for example, the background light allowing greater performances. In that case a pointing and tracking system for aiming the beams of modulated laser light to the first or the second segments is needed. A full-duplex communication requires a pointing and tracking system in the first and in the second segment. A half-duplex communication can be achieved with a pointing and tracking system only in the first segment.

The communication system can also be arranged for emitting a plurality of beams of modulated light having a divergence comprised between 30º and 40º. The system generates light branches to cover all the area in which the second aircraft may be located during the flying operation so it does not require any pointing and tracking system. The first and second segments have a similar configuration for allowing a full-duplex communication.

In an embodiment the first aircraft is a tanker aircraft, the second aircraft is a receiver aircraft and the flying operation is a refueling operation.

In another embodiment the first aircraft is the leader of a group of aircraft flying in close formation and the second aircraft is one of the members of the group.

Other desirable features and advantages of the invention will become apparent from the subsequent detailed description of the invention and the appended claims, in relation with the enclosed drawings.

### BRIEF DESCRIPTION OF DRAWINGS

Figure 1 is a schematic view of a refueling operation between a tanker aircraft and a receiver aircraft using a boom device.
Figure 2 is a schematic view of a refueling operation between a tanker aircraft and a receiver aircraft using a probe and drogue device.
Figure 3 illustrates the free space optical data link of the communication system of the invention.
Figure 4 is a block diagram illustrating the main components of the free space optical data link.
Figure 5 are schematic plan and side views of the volume covered by the free space optical data link of the communication system of the invention in an in-flight refueling system.
Figure 6 is a block diagram illustrating the components of the free space optical data link of an embodiment of the invention using laser light.
Figure 7 is a block diagram illustrating the components of the free space optical data link of another embodiment of the invention using laser light.
Figure 8 is a block diagram illustrating the components of the free space optical data link of an embodiment of the invention using diffuse light sources.

### DETAILED DESCRIPTION OF THE INVENTION

A detailed description of the communication system of the invention for managing a refueling operation between a tanker aircraft and a receiver aircraft follows.

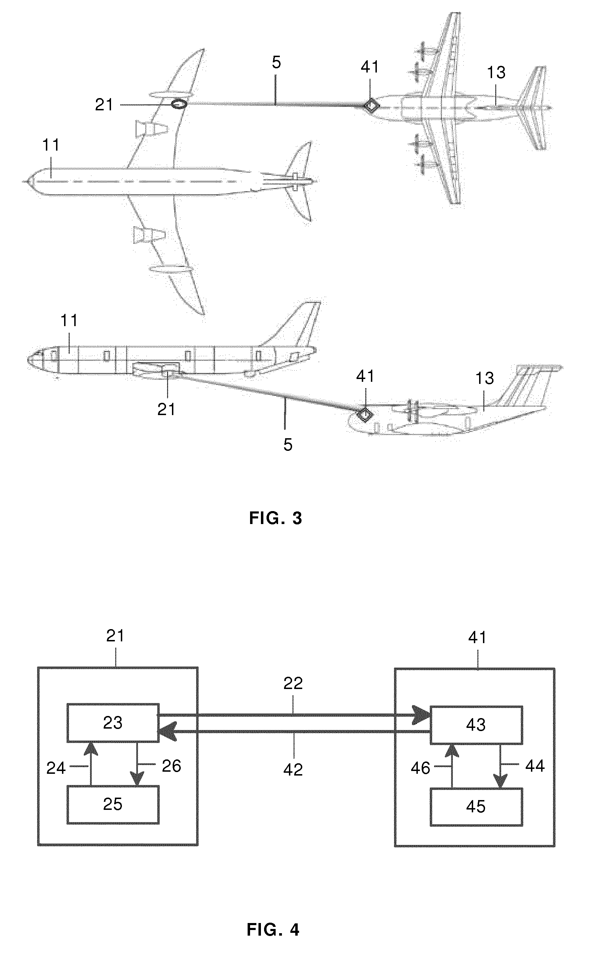

Figure 3 shows a tanker aircraft 11 and an approaching receiver aircraft 13 to be refueled with a probe and drogue device from an underwing pod of the tanker aircraft.

The communication system of the invention is based on a free space optical data link comprising a tanker segment 21 in the tanker aircraft 11 and a receiver segment 41 in a receiver aircraft 13 arranged for sending beams 5 of modulated laser light conveying voice and/or data messages of interest for a refueling operation.

In this specification a voice message shall be understood as a message issued by the pilot of the receiver aircraft 13 (if it is a manned aerial vehicle) or by a human operator of the tanker aircraft 11 and a data message as a message issued by a mechanical device of the tanker or receiver aircraft 11, 13 such as a data message regarding to the state of the refueling station (Boom, Pod or FRU), to fuel information (quantities, flows, pressures), to navigation data such as airspeed, heading, altitude, rate of closure, relative position, ... or degraded condition or failed systems that may impact the operation. Both types of messages will be managed as digital messages through the free space optical data link.

The tanker segment 21 comprises (see Figure 4) a communication control module 25 and an optical module 23. The communication control module 25 is connected to all the sources of messages to be sent from the tanker aircraft 11 to the receiver aircraft 13 and converts the voice messages and the data messages (if needed) in electrical signals 24 representing said messages. The optical module 23 comprises optical means for sending beams 22 of light modulated by the electrical signals 24 towards the optical module 43 of the receiver aircraft 13. The beams 22 are collected by the optical module 43 of the receiver segment 41 that comprises optical means for converting the received beams 22 in electrical signals 44 which are sent to the communication control module 45 of the receiver segment 41 where are demodulated in voice or data messages and transmitted to their destinations.

Similarly the communication control module 45 of the receiver aircraft 13 is connected to all the sources of messages to be sent from the receiver aircraft 13 to the tanker aircraft 11 and converts the voice messages and the data messages (if needed) in electrical signals 46 representing said messages. The optical module 43 comprises optical means for sending beams 42 of light modulated by the electrical signals 46 towards the optical module 23 of the receiver aircraft 13. The beams 42 are collected by the optical module 23 of the tanker segment 21 that comprise optical means for converting the received beams 42 in electrical signals 26 which are sent to the communication control module 25 of the tanker segment 21 where are converted in voice or data messages and transmitted to their destinations. Interface with the crews is provided thru dedicated or current aircraft displays, controls or audio systems such as headsets or speakers.

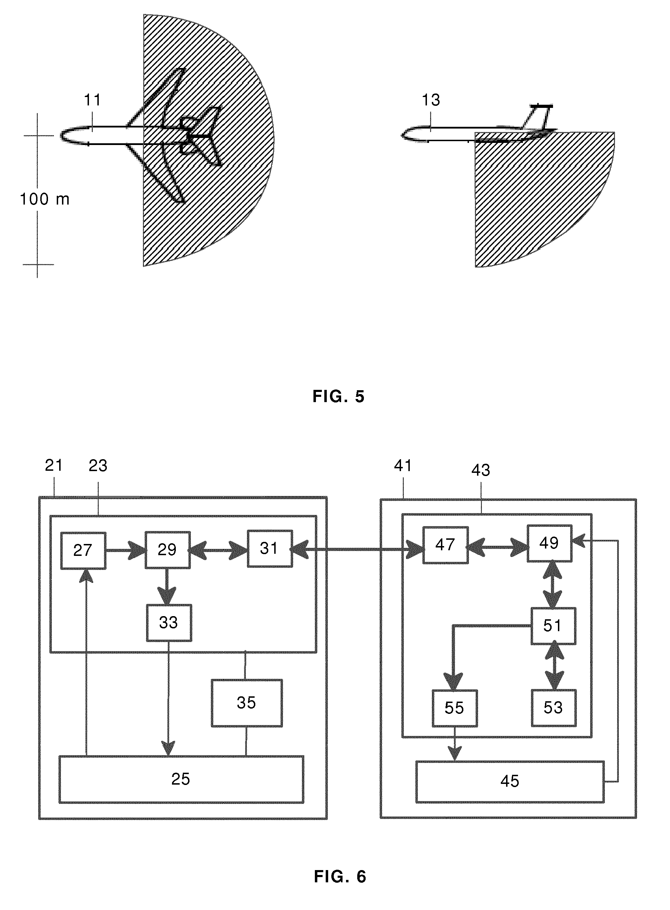

In order to ensure link integrity throughout the main stages of the air refueling operation (receiver aircraft in observation position, pre-contact/astern position, contact position and reform position, as defined in NATO Standard Procedure ATP-56(B) -see http://www.raf.mod.uk/downloads/airtoair56b.cfm-) range is approximately 100 m and coverage volume is a quarter of sphere centered in the middle point of the wingspan and oriented bottom and rearwards (see Figure 5).

Depending on the communication protocol, bit rate of the free optical data link provides up to 1 Mbps, capable of supporting audio and data communication.

Within the infrared range, the most suitable wavelength is around 1550 nm, due to its advantages in terms of eye safety, low attenuation and NVIS compatibility.

Same principle would apply to establish a free optical data link between tanker and receiver aircrafts if air refueling is conducted via boom or even FRU.

The communication system of the invention can use narrow or diffused light sources.

In the first case, the optical modules 23, 43 of the tanker and receiver segments 21, 41 are arranged for emitting beams of laser light of low divergence (up to 1 mrad), what minimizes the required power and the disturbing influences such as, for example, the background light. A pointing and tracking system that stabilizes the alignment of the sender and receiver devices is required for maintaining the beams of laser light always correctly pointed at the receiver or tanker aircraft.

A pointing and tracking system comprises an acquisition sub-system to determine where the laser beam must be pointed at and an actuation sub-system that points the laser beam to its objective. The acquisition sub-system can use a beacon on the receiver or tanker aircraft to detect its position or use other techniques as, for example, pattern recognition to determine where the beam of laser light shall be aimed.

The pointing and tracking system may comprise only one pointing and tracking module in the tanker segment 21 or pointing and tracking modules in the tanker and receiver segments 21, 41 depending on the configuration of the optical modules 23, 43.

In the second case (diffused light source), the optical modules 23, 43 of the tanker and receiver segments 21, 41 are arranged for emitting diffused beams of light of a divergence comprised between 30 and 40º avoiding the need of a pointing and tracking system, taking into account the short distance between tanker and receiver aircraft in a refueling operation.

In an embodiment using laser light (see Figure 6) the tanker segment 21 comprises:
- An optical transceiver module 23, comprising a laser source 27, a beam splitter 29, an optical filter 31 and a photo detector 33, arranged for emitting and acquiring beams of laser light of a divergence up to 1 mrad. The beam splitter 29 is an optical component that drives the output laser light beam from the laser source 27 onto the optical filter 31 and drives the input laser light beam to the photo detector 33. Photo detector 33 converts the filtered input laser light beam into an electrical signal. The optical filter 31 collects the incoming laser light beam and filters it to reduce ambient light noise. It may also comprise optical lenses for adapting the output light, either collimating or spreading the light beam.
- A pointing and tracking module 35 for aiming the beams of laser light emitted by the laser source 37 towards the receiver segment 41. This functionality is required in two different motion modes. First as the receiver aircraft transitions throughout the different refueling stages and second when the receiver is in a steady flight position to maintain precise alignment. The latest requires high frequency steering and low angle corrections whereas the first is a slow motion demanding wide angular range.
- A communication control module 25 that handles the communications in both output and input ways, sending the digital signal to the light source 27 and decoding the incoming transmission from the photo detector 33. It also embeds the control of the pointing and tracking module 35 and interfaces with rest of the aircraft systems (audio management, displays, refueling equipment, etc.).

The receiver segment 41 comprises:
- An optical module 43 comprising an optical filter 47, an electro-optical modulator 49, a beam splitter 51, a retro-reflector 53 and a photo detector 55. The optical retro-reflector 53 is a passive optical system that reflects light incident upon it exactly back along its path of incidence which can be modulated by the electro-optical modulator 49 to transmit data to the tanker segment 21, without using a laser source of its own or pointer-tracker. In operation, the tanker segment 21 would illuminate the receiver segment 41 with alternatively a modulated and a continuous-wave (unmodulated) laser light beam 22 (see Fig. 4). When this beam is used by the receiver segment 41 for transmission, the electro-optical modulator 49 would then be turned on and off with an electrical signal that carries the receiver's data. This impresses the data stream upon the retro-reflected beam 42, which then carries it back to the tanker segment 21. A pointing and tracking module is therefore not required in the receiver segment 41. The optical filter 47, the beam splitter 51 and, the photo detector 55 perform similar functions to the equivalent equipment in the tanker segment 21.
- A communication control module 45 that performs similar functions to the equivalent equipment in the tanker segment 21.

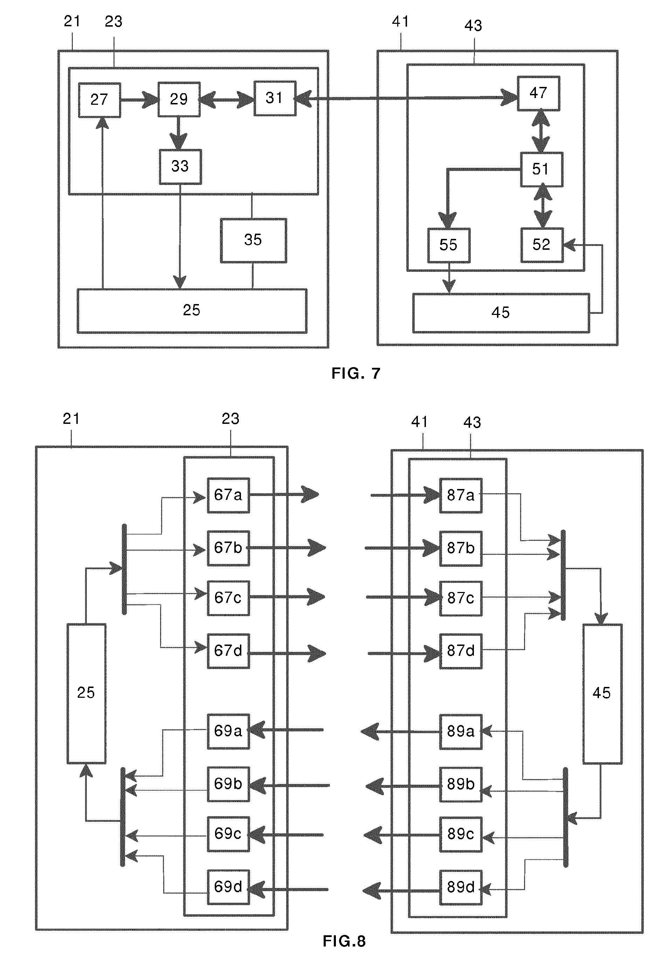

In another embodiment using laser light (see Fig. 7) a Modulated Retro-Reflector 52 is used instead of the optical retro-reflector 53 and the electro-optical modulator 49 of the embodiment illustrated in Figure 6.

In the above-mentioned embodiments the free space optical data link is adapted to transmit voice and/or data messages between the tanker aircraft 11 and the receiver aircraft 13 in a half-duplex communication mode.

The messages from the tanker aircraft 11 to the receiver aircraft 13 are conveyed by beams of modulated laser light emitted by the optical module 23 of the tanker segment 21 and are received by the optical module 43 of the receiver segment 41.

The messages from the receiver aircraft 13 to the tanker aircraft 11 are conveyed by beams of non-modulated laser light emitted by the optical module 23 of the tanker segment 21 that are reflected and modulated in the optical module 43 of the receiver segment 41.

In an embodiment using diffuse light (see Figure 8) the tanker segment 21 comprises:
- An optical module 23 comprising a set of light sources 67a, 67b, 67c, 67d for emitting beams of modulated light having a divergence comprised between 30º and 40º and a set of photo detectors 69a, 69b, 69c, 69d.
- A communication control module 25.

The receiver segment 41 comprises:
- An optical module 43 comprising a set of light sources 89a, 89b, 89c, 89d for emitting beams of modulated light having a divergence comprised between 30º and 40º and a set of photo detectors 87a, 87b, 87c, 87d.
- A communication control module 45.

Light sources 67's, 89's may be either LEDs or laser diodes with adapting optics to spread the beam up to the required angle. In tanker aircraft 11, number and beam angle of the sources is chosen so that they cover a circular sector at the rear part of the wings from tip to tip, typically no less than 4 sources of 40º divergence angle. In receiver aircraft 13, the number and beam angle of the light sources 89's is chosen so that they illuminate at least one photo detector 69's of the tanker aircraft 11 while the receiver aircraft 13 is located at any point between the observation, pre-contact/astern, contact and reform positions. Communication control modules 25, 45 manage the transmission of digital data to the light sources and from the photo detectors and interface to the aircraft systems.

Unlike the embodiments illustrated in Figures 6 and 7, pointing and tracking modules are not needed, but Multiple-input, Multiple-output (MIMO) algorithms are required to manage the transmissions between the sets of light sources 67's, 89's and photo detectors 87's, 69's. Light sources 67's, 89's and photo detectors 87's, 69's may be allocated either distributed under the lower fuselage and wings or arranged in a single module.

In this embodiment the free space optical data link is adapted to transmit voice and/or data messages between the tanker aircraft 11 and the receiver aircraft 13 in a full-duplex communication mode.

The main advantages of the communication system of the invention with respect to the prior art are the following:
- The communications and indications between the tanker and the receiver aircraft in the prior art are mainly based on symbols and lights on the fuselage and fairings of the tanker aircraft (which are quite limited in the variety of messages) and voice communications when EMCON rules are not applicable. The communication system of the invention enables a more complete, customizable, friendly and comfortable data presentation system within the cockpit of receiver aircraft. This would reduce the stress over the pilots and possible misunderstandings in low-visibility, covert or radio silence conditions, improving the safety of the operations.
- The amount of information available to the receiver pilot in the prior art is quite limited. With the information in the receiver aircraft provided by the communication system of the invention, the receiver pilot would be more aware of the actual situation of the refueling operation and would be able to make decisions safer and more quickly.
- The communication system of the invention is compatible with the EMCON restrictive requirements, allowing operating in such conditions without operational restrictions and without any decrease in safety.
- The communication system of the invention is bi-directional, providing great flexibility to in-flight refueling operations and allowing modifications to the prescheduled mission plan. This also allows the receiver aircraft to provide data to the tanker aircraft during radio silent operations.
- The communication system of the invention facilitates the refueling of Unmanned Aerial Vehicles (UAV) and the assisted and/or automatic refueling of receiver aircraft.

Although the present invention has been described in connection with various embodiments, it will be appreciated from the specification that various combinations of elements, variations or improvements therein may be made, and are within the scope of the invention.

## Claims

1. A communication system of voice and/or data messages between a first and a second aircraft through a free space optical data link for managing a flying operation involving both aircraft in scenarios where electromagnetic communication systems cannot be used and/or in adverse environmental conditions, **characterized in that** the free space optical data link comprises a first segment (21) in the first aircraft and a second segment (41) in the second aircraft comprising respectively communication control modules (25, 45) adapted for converting the voice and/or data messages in electrical signals and vice versa and optical modules (23, 43) adapted for emitting beams of light modulated by said electrical signals and for converting received beams of modulated light in electrical signals.

2. A communication system according to claim 1, wherein:
- the optical modules (23, 43) are arranged for emitting beams of modulated light having a divergence lesser than 1 mrad.
- the free space optical data link also comprises a pointing and tracking system for aiming the beams of modulated laser light to the first and/or to the second segments (21, 41).

3. A communication system according to claim 2, wherein:
- the first segment (21) comprises a pointing and tracking module (35) for aiming the beams of laser light to the second segment (41);
- the optical module (23) of the first segment (21) comprises a laser source (27) connected to the communication control module (25) for emitting beams of modulated laser light, a photo detector (33) for receiving beams of modulated laser light connected to the communication control module (25) and a beam splitter (29) for driving the emitted and received light beams to their destinations;
- the optical module (43) of the second segment (41) comprises a photo detector (55) for receiving beams of modulated laser light connected to the communication control module (45), means (53, 49; 52) for emitting beams of modulated laser light using a beam of non-modulated laser light received from the first segment (21) and a beam splitter (51) for driving the emitted and received light beams to their destinations;
- the free space optical data link is adapted to transmit voice and/or data messages between the first aircraft and the second aircraft in a half-duplex communication mode emitting a beam of modulated laser light from the first segment (21) to transmit a message from the first aircraft to the second aircraft and emitting a beam of non-modulated laser light from the first segment (21) and modulating it in the second segment (41) to transmit a message from the second aircraft to the first aircraft.

4. A communication system according to claim 3, wherein said means for emitting beams of modulated laser light from the second segment (41) using a beam of non-modulated laser light received from the first segment (21) are a retro-reflector (53) and an electro-optical modulator (49) connected to the communication control module (45).

5. A communication system according to claim 3, wherein said means for emitting beams of modulated laser light from the second segment (41) using a beam of non-modulated laser light received from the first segment (21) is a modulated retro-reflector (52) connected to the communication control module (45).

6. A communication system according to claim 1, wherein:
- the optical modules (23, 43) are arranged for emitting a plurality of beams of modulated light having a divergence comprised between 30º and 40º;
- the free space digital optical data link is adapted to transmit voice and/or data messages between first and second aircraft in a full-duplex communication mode.

7. A communication system according to claim 6, wherein the optical modules (23, 43) of first and second segments (21, 41) comprise a set of light sources (67a, 67b, 67c, 67d; 89a, 89b, 89c, 89d) connected to the communication control modules (25, 45) for emitting beams of modulated laser light and a set of photo detectors (69a, 69b, 69c, 69d; 87a, 87b, 87c, 87d) for receiving beams of modulated light connected to the communication control modules (25, 45).

8. A communication system according to any of claims 1-7, wherein said beams of light are beams of infrared light

9. A communication system according to any of claims 1-8, wherein the first aircraft is a tanker aircraft (11), the second aircraft is a receiver aircraft (11) and their flying operation is a refueling operation of the receiver aircraft (13) from the tanker aircraft (11).

10. A communication system according to claim 9, wherein the first and second segments (21, 41) are adapted for operating within a range of 100m.

11. A communication system according to any of claims 9-10, wherein the second aircraft is a manned aerial vehicle or an unmanned aerial vehicle.

12. An in-flight refueling system comprising a tanker aircraft (11), at least a receiver aircraft (13), and refueling means for refueling the receiver aircraft (13) from the tanker aircraft (11) further comprising a communication system according to any of claims 9-11.
